# EUROPÄISCHE PATENTSCHRIFT

(11) **EP 0 399 396 B1**
(45) Veröffentlichungstag und Bekanntmachung des Hinweises auf die Patenterteilung: **06.10.1993**
(21) Anmeldenummer: 90109443.3
(22) Anmeldetag: 18.05.1990
(51) Int. Cl.: C08G 18/34, C08G 18/72, C09J 175/04

(54) **Schmelzklebelacklösung für hitzebeständige Beschichtungen**
Melt-adhesive coating solution for heat-resistant coatings
Solution d'enduit adhésif thermoréactivable pour des revêtements résistant à la chaleur

(30) Priorität: 26.05.1989 DE 3917197
(43) Veröffentlichungstag der Anmeldung: 28.11.1990
(73) Patentinhaber: BASF Aktiengesellschaft, 67063 Ludwigshafen (DE)
(72) Erfinder: Hoessel, Peter, Dr., D-6707 Schifferstadt (DE); Schupp, Hans, Dr., D-6520 Worms 1 (DE); Lienert, Klaus, Dr., D-3000 hamburg 50 (DE); Lehmann, Helmut, D-2057 Rheinbek (DE)

(56) Entgegenhaltungen:
- DE-A- 3 517 753
- FR-A- 2 328 026
- GB-A- 2 108 982
- JOURNAL OF POLYMER SCIENCE, POLYMER CHEMISTRY EDITION. vol. 26, no. 8, 05 August 1988, NEW YORK US Seiten 2263 - 2272; Otsuki et al: "Preparation and properties of aromatic-aliphatic copolyamides from aromatic diisocyanates and dicarboxylic acids"

## Beschreibung

Die vorliegende Erfindung betrifft eine Schmelzklebelacklösung, enthaltend
A) 5 bis 80 Gew.-% eines Copolyamids, aufgebaut aus Einheiten, die sich ableiten von
   - A₁): organischen Dicarbonsäuren 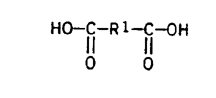 wobei R¹ für einen aliphatischen Rest mit 1 bis 20 C-Atomen oder einen aromatischen Rest mit 5 bis 25 C-Atomen steht,
   und
   - A₂): einer Mischung von Diisocyanaten aus
   - a₂₁): 20 bis 95 mol.% eines Diisocyanats oder eines Gemisches von aromatischen Diisocyanaten der allgemeinen Formel

   OCN-R²-NCO

   wobei R² für einen aromatischen Rest mit 5 bis 25 C-Atomen steht,
   - a₂₂): 5 bis 70 mol% eines Diisocyanats der allgemeinen formel

   OCN-R³-NCO

   wobei R³ für den Rest 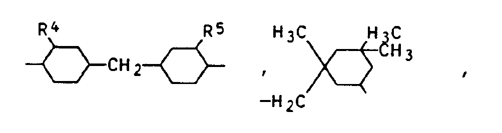 oder einen durch 1 bis 3 C₁-C₄-Alkylgruppen substituierten linearen aliphatischen Rest mit 3 bis 30 C-Atomen steht und R⁴ und R⁵ unabhängig voneinander je eine C₁-C₄-Alkylgruppe oder ein Wasserstoffatom darstellen, und
   - a₂₃): 0 bis 20 mol% eines Diisocyanats der allgemeinen Formel

   OCN-(CH₂)_{y}-NCO

   wobei y eine ganze Zahl von 1 bis 20 ist,
   und
B) 0.5 bis 30 Gew.-% eines blockierten Di- oder Polyisocyanats in einem organischen Lösungsmittel oder Lösungsmittelgemisch. Hitzehärtbare Schmelzklebelacke, sog. Backlacke, werden für die Herstellung mechanisch und thermisch beanspruchter Wickelkörper aus mit Lack isolierten Drähten verwendet, deren Windungen mit Hilfe von äußerer wärmezufuhr oder durch Stromwärme durch Schmelzen und nachfolgendes Verfestigen einer solchen Backlackschicht miteinander verklebt (verbacken) werden.

Als Backlacke können prinzipiell zwei verschiedene Grundtypen eingesetzt werden, nämlich thermoplastische und duromere Systeme.

Aus der US-A 4 505 978 sind thermoplastische Systeme aus teilaromatischen Polyamiden bekannt.

Thermoplastische Systeme weisen generell den Nachteil auf, daß die Wiedererweichungstemperatur nahezu identisch mit der Verbackungstemperatur ist. Eine für hitzebeständige Anwendungen gewünschte hohe Wiedererweichungstemperatur macht eine ebenfalls hohe Verbackungstemperatur erforderlich, bei niedrigen Verbackungstemperaturen sind wiederum die Wiedererweichungstemperaturen unerwünscht niedrig.

Teilaromatische Polyamidlösungen sind auch aus der DE-A 36 12 372 bekannt. Die Wiedererweichungstemperaturen der aus den Lösungen erhaltenen Schmelzklebelacke werden mit 180 bis 200°C angegeben.

Auch die aus der US-A 4 420 535 bekannten teilaromatischen Systeme können in ihren Eigenschaften nicht voll befriedigen.

Aliphatische Polyamidlösungen weisen gegenüber teilaromatischen Polyamidlösungen den Nachteil auf, daß toxische Lösungsmittel, vor allem Kresol verwendet werden müssen.

Duromere, hitzehärtbare Backlacke gehen beim Verbacken durch eine Vernetzungsreaktion aus einem thermoplastischen Zustand in den ausgehärteten Endzustand über.

Das Problem bei derartigen duromeren, hitzehärtbaren Backlacken besteht darin, daß sowohl die Art des Vernetzers als auch die Kombination des Basisharzes mit dem Vernetzer fein abgestimmt sein muß, damit beim Lackierungsvorgang der thermoplastische Zustand und die Verbackungsfähigkeit erhalten bleibt und gleichzeitig ein möglichst temperaturbeständiger, ausgehärteter Endzustand nach erfolgter Verbackung erreicht wird.

Aus der DE-A 35 17 753 ist eine Polyamidlösung bekannt, bei der durch Zugabe von blockiertem Di- oder Polyisocyanat als Vernetzer ein ausgehärteter duromerer Schmelzklebelack erhalten wird. Die erreichte Wiedererweichungstemperatur ist mit 193°C nach einer Verbackungstemperatur von 180°C (30 min) für hohe Anforderungen noch nicht ausreichend.

Durch die Zugabe von blockierten Polyisocyanatvernetzern sollte die Lagerstabilität von Schmelzklebelacklösungen nicht beeinträchtigt werden. Bereits in der Schmelzklebelacklösung ablaufende Vernetzungsreaktionen, erkennbar an einem Viskositätsanstieg, erhöhen die notwendige Verbackungstemperatur und beeinträchtigen generell die Verbackungsfähigkeit.

Aufgabe der vorliegenden Erfindung war es daher, Schmelzklebelacklösungen für hitzebeständige Beschichtungen zur Verfügung zu stellen. Die aus den Lösungen erhaltenen Schmelzklebelacke sollten sich durch hohe Wiederereichungstemperaturen bei geringen Verbackungstemperaturen auszeichnen, während die Lösungen möglichst lagerstabil und weitgehend frei von toxischen Lösungsmitteln sein sollen.

Erfindungsgemäp wird diese Aufgabe gelöst durch Schmelzklebelacklösungen, enthaltend
A) 5 bis 80 Gew.-% eines Copolyamids, aufgebaut aus Einheiten, die sich ableiten von
   - A₁): organischen Dicarbonsäuren 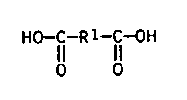 wobei R¹ für einen aliphatischen Rest mit 1 bis 20 C-Atomen oder einen aromatischen Rest mit 5 bis 25 C-Atomen steht,
   und
   - A₂): einer Mischung von Diisocyanaten aus
   - a₂₁): 20 bis 95 mol.% eines Diisocyanats oder eines Gemisches von aromatischen Diisocyanaten der allgemeinen Formel

   OCN-R²-NCO

   wobei R² für einen aromatischen Rest mit 5 bis 25 C-Atomen steht,
   - a₂₂): 5 bis 70 mol% eines Diisocyanats der allgemeinen Formel

   OCN-R³-NCO

   wobei R³ für den Rest 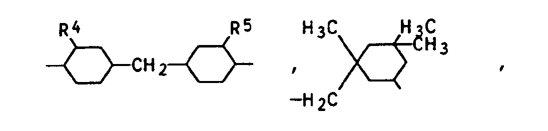 oder einen durch 1 bis 3 C₁-C₄-Alkylgruppen substituierten linearen aliphatischen Rest mit 3 bis 30 C-Atomen steht und R⁴ und R⁵ unabhängig voneinander je eine C₁-C₄-Alkylgruppe oder ein Wasserstoffatom darstellen,
   - a₂₃): 0 bis 20 mol% eines Diisocyanats der allgemeinen Formel

   OCN-(CH₂)_{y}-NCO

   wobei y eine ganze Zahl im Bereich von 1 bis 20 ist,
   und
B) 0.5 bis 30 Gew.-% eines blockierten Di- oder Polyisocyanats

in einem organischen Lösungsmittel oder Lösungsmittelgemisch. In den Dicarbonsäuren A₁ 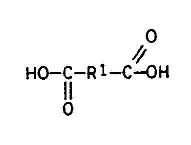
kann R¹ einen aliphatischen Rest mit 1 bis 20 C-Atomen oder einen aromatischen Rest mit 5 bis 25 C-Atomen darstellen. Bei den aliphatischen Dicarbonsäuren kann es sich um lineare aliphatische, cycloaliphatische oder heterocyclische Dicarbonsäuren handeln, welche wiederum einzeln oder im Gemisch mit anderen aliphatischen Dicarbonsäuren verwendet werden können.

Bevorzugt bei den aliphatischen Dicarbonsäuren sind lineare aliphatische Dicarbonsäuren 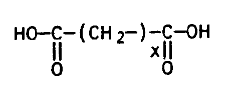
in denen x eine ganze Zahl von 1 bis 16 darstellt, besonders bevorzugt sind lineare aliphatische Dicarbonsäuren, in denen x einen Wert von 3 bis 12 hat, ganz besonders bevorzugt sind Azelain- und Sebacinsäure sowie deren Mischungen.

Als aromatische Dicarbonsäuren können Cyclopentadienyl, Phenyl-, Naphthyl-, und Diphenylcarbonsäuren sowie Mischungen dieser Säuren, bei denen die aromatischer Ringsysteme gegebenfalls substituiert sind, eingesetzt werden. Substituenten können z.B. Alkyl- oder Alkoxygruppen, bevorzugt C₁-C₄-Alkyl- oder Alkoxygruppen sein. Die aromatischen Ringsysteme können sowohl kondensiert, als auch über Heteroatome oder Kohlenstoffatome bzw. -ketten verbrückt sein.

Beispiele für die zuletzt genannten Dicarbonsäuren sind Diphenylmethan-, Diphenylsulfon- oder Diphenyloxiddicarbonsäuren. Es können auch Gemische von aromatischen Dicarbonsäuren eingesetzt werden.

Bevorzugt werden gegebenenfalls substituierte Phenyl-, Naphthyl- oder Diphenylmethandiisocarbonsäuren eingesetzt.

Besonders bevorzugt sind Isophthalsäure, Terephthalsäure und Naphthalindicarbonsäuren.

Besonders bevorzugt verwendet man ein Gemisch aus aliphatischen und aromatischen Dicarbonsäuren, wobei das Molverhältnis von aliphatischen zu aromatischen Dicarbonsäuren 6:1 bis 1:2, besonders bevorzugt 4:1 bis 1:1 beträgt.

Ganz besonders bevorzugt ist die Verwendung einer Mischung aus aliphatischen und aromatischen Dicarbonsäuren im Molverhältnis 2,5 bis 1,5:1, insbesondere etwa 2:1.

Bei den eingesetzten Diisocyanaten A₂ handelt es sich um eine Mischung von Diisocyanaten aus
- a₂₁): 20 bis 95.% eines Diisocyanats oder eines Gemisches von aromatischen Diisocyanaten der allgemeinen Formel

OCN-R²-NCO

wobei R² für einen aromatischen Rest mit 5 bis 25 C-Atomen steht,
- a₂₂): 5 bis 70 mol% eines Diisocyanats der allgemeinen Formel

OCN-R³-NCO

wobei R³ für den Rest 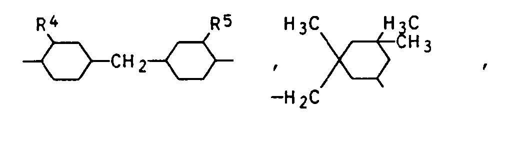 oder einen durch 1 bis 3 C₁-C₄-Alkylgruppen substituierten linearen aliphatischen Rest mit 3 bis 30 C-Atomen steht und R⁴ und R⁵ unabhängig voneinander je eine C₁-C₄-Alkylgruppe oder ein Wasserstoffatom darstellen,
- a₂₃): 0 bis 20 mol% eines Diisocyanats der allgemeinen Formel

OCN-(CH₂)_{y}-NCO

wobei y eine ganze Zahl im Bereich von 1 bis 20 ist.

Geeignete Diisocyanate a₂₁ sind z.B. Cyclopentadienyl-, Phenyl-. Naphthyl- oder Diphenyldiisocyanate, bei denen die aromatischen Ringgruppen gegebenenfalls substituiert sind. Substituenten können z.B. Alkyl- oder Alkoxyruppen, bevorzugt C₁ bis C₄ Alkyl- oder Alkoxygruppen sein. Die aromatischen Ringsysteme können sowohl kondensiert als auch über Heteroatome oder Kohlenstoffatome bzw. -ketten verbrückt sein. Beispiele sind 2,4'-Diphenylmethandiisocyanat, 4,4'-Diphenylmethandiisocyanat, 4,4'-Diphenyloxiddiisocyanat, Diphenylsulfondiisocyanat, 1,3-Phenylendiisocyanat, 1,4-Phenylendiisocyanat, 2,4-Toluylendiisocyanat.

Bevorzugt werden gegebenenfalls substituierte Phenyl-, Naphthyl- oder Diphenylmethandiisocyanate eingesetzt.

Besonders bevorzugt finden 2,4-Toluylendiisocyanat und 4,4'-Diphenylmethandiisocyanat Verwendung.

Als Komponente a₂₁ kann ein einziges aromatisches Diiocyanat oder ein Gemisch von aromatischen Diisocyanaten eingesetzt werden.

Bei den Diisocyanten a₂₂ handelt es sich um Diisocyanate der allgemeinen Formel

OCN-R³-NCO

wobei R³ für den Rest 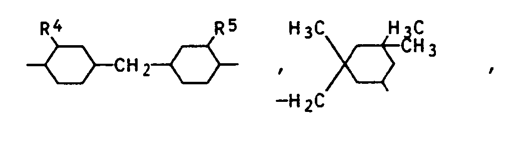
oder einen durch 1 bis 3 C₁-C₄-Alkylgruppen substituierten linearen aliphatischen Rest mit 3 bis 30 bevorzugt 5 bis 20 C-Atomen steht und R⁴ und R⁵ jeweils eine c₁ bis C₄ Alkylgruppe oder ein Wasserstoffatom darstellen. Insbesondere sind R⁴ und R⁵ Methyl- oder Ethylgruppen.

Besonders bevorzugt verwendet man als Diisocyanate a₂₂ 3,3'-Dimethyl- 4,4'-dicyclohexylmethandiisocyanat, Isophorondiisocyanat und Trimethylhexamethylendiisocyanat. Es können auch Gemische der als Diisocyanate a₂₂ angeführten Verbindungen eingesetzt werden.

Bei den Diisocyanaten a₂₃ gemäß Anspruch 1 handelt es sich um lineare aliphatische Diisocyanate der allgemeinen Formel

OCN-(CH₂)_{y}-NCO

wobei y eine ganze Zahl von 1 bis 20 darstellt, die einzeln oder im Gemisch Verwendung finden. Bevorzugt ist y 4 bis 15, besonders bevorzugt 6 bis 12.

Die Gemische von Diisocyanaten a₂₁ bis a₂₃ werden in folgenden molaren Verhältnissen eingesetzt:
20 bis 95 mol.%, bevorzugt 30 bis 90 mol.% der Diisocyanate a₂₁),
5 bis 70 mol.%, bevorzugt 10 bis 60 mol.% der Diisocyanate a₂₂) und
0 bis 20 mol.%, bevorzugt 0 bis 10 mol.% der Diisocyanate a₂₃)

Besonders bevorzugt sind
40 bis 80 mol.% der Diisocyanate a₂₁)
20 bis 60 mol.% der Diisocyanate a₂₂)

Ganz besonders bevorzugt ist ein etwa äquimolares Gemisch aus 2,4-Toluylendiisocyanat, 4,4'-Diphenylmethandiisocyanat und einem Isomerengemisch aus 2,2,4- und 2,4,4-Trimethylhexamethylendiisoxyanat (HÜLS AG).

Das molare Verhältnis der Summe der eingesetzten Dicarbonsäuren zur Summe der eingesetzten Diisocyanate beträgt vorzugsweise 1:1 bis 1:0,8, insbesondere 1:0,99 bis 1:0,95.

Als Blockierungsmittel für die Di- oder Polyisocyanate der Komponente B werden bevorzugt Lactame der allgemeinen Formel 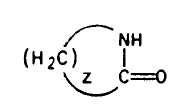
wobei z eine ganze Zahl im Bereich 3 bis 22 ist, eingesetzt, um bei der später erfolgenden Verbackung die Freisetzung toxischer Gase, die z.B. bei der Verdampfung von Phenolen auftritt, zu vermeiden.

Besonders bevorzugt wird Caprolactom als Blockierungsmittel eingesetzt. Als Polyisocyanate kommen z.B. Diphenylmethandiisocyanat, Phenylendiisocyanat, Toluylendiisocyanat, Lupranat® MS (BASF AG) und Desmodur® L (BAYER AG) in Frage. Bei Lupranat® MS handelt es sich um ein Gemisch aus 4,4'-, 2,4'-Diphenylmethandiisocyanat und Oligomeren von Diphenylmethandiisocyanaten.

Bevorzugt wird Desmodur® L als Polyisoocyanat verwendet, wobei es sich um ein Reaktionsprodukt aus einem Toluylendiisocyanat und einem Polyalkoholgemisch handelt.

Den Lösungen können in der Lackindustrie übliche Verlaufsmittel und sonstige Hilfsmittel wie Kollophonium, Benztriazol usw. in üblichen Mengen z.B. bis 1 Gew.-% zugesetzt werden.

Zur Herstellung des Copolyamid A können die oben genannten Ausgangsverbindungen bevorzugt in amidischen Lösungsmitteln mit Siedepunkten von 60 bis 250°C, vorzugsweise in N-Methylpyrrolidon vorgelegt und das Gemisch innerhalb von 1 bis 20 Stunden auf 180 bis 200°C unter Rühren aufgeheizt werden. Vorzugsweise wird zunächst eine 5 bis 80 %ige Lösung der Umsetzungsprodukte dargestellt, aus welcher nach Abschluß der Reaktion mit N-Methylpyrrolidon, gegebenenfalls auch durch Zusatz anderer Lösungsmittel wie Xylol, Toluol 10 bis 50 %ige Lösungen mit Viskositäten von 100 bis 5000 vorzugsweise 200 bis 3000 mPas (23°C) eingestellt werden können.

Nach der Reaktion der Dicarbonsäuren mit den Diisocyanaten werden vor, während oder nach der Verdünnung mit Lösungsmitttel <0,5 bis 30 Gew.-% eines blockierten Polyisocyanates B), bezogen auf die Lösung bei einer Temperatur von 20 bis 120°C unter fortwährender Durchmischung zugesetzt.

Die erhaltenen Schmelzklebelacklösungen zeigen über einen Zeitraum von 6 Monaten keinen merklichen Viskositätsanstieg, sie zeichnen sich daher durch ihre gute Lagerstabilität aus.

Die Applikation der erfindungsgemäßen Backlacklösungen erfolgt im allgemeinen auf Drähte aus Kupfer oder aus Aluminium, welche mit einer für die Elektroindustrie üblichen Isolierschicht aus hochtemperaturbeständigen Harzen, wie Polyesterimiden, Polyestern oder Polyamidimiden überzogen sind. Diese isolierten Drähte werden zur Trocknung der einzelnen Backlackschichten bei Einbrenntemperaturen z.B. von 200 bis 600°C, bevorzugt 300 bis 400°C und Lackiergeschwindigkeiten z.B. von 10 bis 60 m/min, bevorzugt 25 bis 35 m/min lackiert.

Auf diese Weise erhält man lagerstabile und wickelfeste Backlackdrähte, welche in Form der entsprechenden Spulenkörper durch Heißluft oder durch Stromwärme verbacken werden können.

Die erfindungsgemäßen Schmelzklebelacklösungen, bevorzugt solche, welche mit Lactamen blockierte Polyisocyanate enthalten, sind problemlos applizierbar. Bei der beschriebenen Beschichtung der Drähte und Trocknung der Lackschicht findet noch keine zur Aushärtung ausreichende Vernetzung statt. Die aus den Drähten erhaltenen Spulenkörper sind daher bei relativ niedrigen Temperarturen von ca. 180°C verbackbar und zeigen nach Verbackung ein hohes Eigenschaftsniveau mit hohen Wiedererweichungstemperaturen und hoher Verbackungsfestigkeit.

### Beispiel 1

202,0 g (1,000 mol) Sebacinsäure und 83,0 g (0,500 mol) Terephthalsäure wurden in 870,0 g N-Methylpyrrolidon vorgelegt. Sofort nach der Zugabe von 86,2 g (0,495 mol) 2,4-Toluylendiisocyanat, 123,8 g (0,495 mol) 4,4-Diphenylmethandiisocyanat und 104,0 g (0,495 mol) Trimethylhexamethylendiisocyanat (Gemisch aus den 2,2,4- und 2,4,4-Isomeren; HÜLS AG) wurde das Gemisch auf 80°C aufgeheizt, mit 10°C/Stunde auf 180°C eingestellt und diese Temperatur für eine Stunde gehalten. Nach dem Abkühlen auf 23°C betrug die Viskosität 7620 mPas bei 35 Festgehalt. Nach der zugabe von 92,6 g einer 50 %igen Lösung von mit Caprolactam blockiertem Desmodur L® (BAYER AG) in N-Methylpyrrolidon wurde der Feststoffgehalt mit Xylol auf 20 % eingestellt.

Die Viskosität der 20 %igen Lösung betrug 210 mPas bei 23°C. Diese Lösung war über einen Zeitraum von 6 Monaten im Temperaturbereich zwischen -10 und 45°C lagerstabil.

Mit diesem Lack wurde ein mit einem handelsüblichen Polyesterimid-Grundlack beschichteter 0,315 mm Kupferdraht auf einer üblichen Drahtlackiermachine lackiert. Eine verbackene Wickellocke zeigte folgende nach DIN 46 435 bestimmte Eigenschaften:
- Lackierofen-Temperatur:: vorne 320°C; hinten 340°C; (Ofenlänge 2,50 m)
- Verbackungsbedingungen:: 30 Minuten bei 180°C;
- Wiedererweichungstemperatur:: 255°C.

- Lackierofen-Temperatur:: vorne 340°C; hinten 360°C;
- Verbackungsbedingungen:: 30 Minuten bei 180°C;
- Wiedererweichungstemperatur:: 268°C.

- Lackierofen-Temperatur:: vorne 360°C; hinten 380°C;
- Verbackungsbedingungen:: 30 Minuten bei 180°C;
- Wiedererweichungstemperatur:: 250°C.

Die Prüfung am sog. Drillstab (R. Steinhaus, Proc. of the 15th Electronic/Electrical Insulation Conference, Chicago 1981, IEEE Publ. Nr. 81/CH 1717 - 8/81; S. 56 (1981), und R. Steinhaus, Proc. of the 18th Electronic/Electrical Insulation Conference, Chicago 1987, IEEE Publ. Nr. 87/CH 2451-. 1, S. 152 (1987)), zeigte folgende Verbackungsfestigkeiten:
23°C: 280; 130°C: 170; 155°C: 40; 165°C: 25; 175°C: 18 Newton.

### Beispiel 2

146,1 g (1,000 mol) Adipinsäure und 83,0 g (0,500 mol) Terephthalsäure wurden in 870,0 g N-Methylpyrrolidon vorgelegt. Sofort nach der zugabe von 86,2 g (0,495 mol) 2,4-Toluylendiisocyanat, 123,8 g (0,495 mol) 4,4-Diphenylmethandiisocyanat und 104,0 g (0,495 mol) Trimethylhexamethylendiisocyanat (Gemisch aus den 2,2,4- und 2,4,4-Isomeren; HÜLS AG) wurde das Gemisch auf 80°C aufgeheizt, mit 10°C/Stunde auf 180°C eingestellt und diese Temperatur für eine Stunde gehalten. Nach dem Abkühlen auf 23°C betrug die Viskosität 7900 mPas bei 35 % Festgehalt. Nach der Zugabe von 92,6 g einer 50 %igen Lösung von mit Caprolactam blockiertem Desmodur L® (BAYER AG) in N-Methylpyrrolidon wurde der Feststoffgehalt mit Xylol auf 20% eingestellt.

Die Viskosität der 20 %igen Lösung betrug 250 mPas bei 23°C. Diese Lösung war über einen Zeitraum von 6 Monaten im Temperaturbereich zwischen -10 und 45°C lagerstabil.

Mit diesem Lack wurde ein mit einem handelsüblichen Polyesterimid-Grundlack beschichteter 0,315 mm Kupferdraht auf einer üblichen Drahtlackiermachine lackiert. Eine verbackene Wickellocke zeigte folgende nach DIN 46 435 bestimmte Eigenschaften:
- Lackierofen-Temperatur:: vorne 320°C; hinten 340°C; (Ofenlänge 2,50 m)
- Verbackungsbedingungen:: 30 Minuten bei 180°C;
- Wiedererweichungstemperatur:: 260°C.

- Lackierofen-Temperatur:: vorne 340°C; hinten 360°C;
- Verbackungsbedingungen:: 30 Minuten bei 180°C;
- Wiedererweichungstemperatur:: 277°C.

- Lackierofen-Temperatur:: vorne 360°C; hinten 380°C;
- Verbackungsbedingungen:: 30 Minuten bei 180°C;
- Wiedererweichungstemperatur:: 255°C.

Die Prüfung am sog. Drillstab (R. Steinhaus, Proc. of the 15th Electronic/Electrical Insulation Conference, Chicago 1981, IEEE Publ. Nr. 81/CH 1717 - 8/81; S. 56 (1981), und R. Steinhaus, Proc. of the 18th Electronic/Electrical Insulation Conference, Chicago 1987, IEEE Publ. Nr. 87/CH 2451-.1, S. 152 (1987)), zeigte folgende Verbackungsfestigkeiten:
23°C: 280; 130°C: 180; 155°C: 50 Newton.

### Beispiel 3

202,0 g (1,000 mol) Sebacinsäure und 83,0 g (0,500 mol) Terephthalsäure wurden in 870,0 g N-Methylpyrrolidon vorgelegt. Sofort nach der Zugabe von 86,2 g (0,495 mol) 2,4-Toluylendiisocyanat, 123,8 g (0,495 mol) 4,4-Diphenylmethandiisocyanat und 110,0 g (0,495 mol) Isophorondiisocyanat (HÜLS AG) wurde das Gemisch auf 80°C aufgeheizt, mit 10°C/Stunde auf 180°C eingestellt und diese Temperatur für eine Stunde gehalten. Nach dem Abkühlen auf 23°C betrug die Viskosität 7620 mPas bei 35 Festgehalt. Nach der zugabe von 92,6 g einer 50 %igen Lösung von mit Caprolactam blockiertem Desmodur L® (BAYER AG) in N-Methylpyrrolidon wurde der Feststoffgehalt mit Xylol auf 20 % eingestellt.

Die Viskosität der 20 %igen Lösung betrug 190 mPas bei 23°C. Diese Lösung war über einen Zeitraum von 6 Monaten im Temperaturbereich zwischen -10 und 45°C lagerstabil.

Mit diesem Lack wurde ein mit einem handelsüblichen Polyesterimid-Grundlack beschichteter 0,315 mm Kupferdraht auf einer üblichen Drahtlackiermachine lackiert. Eine verbackene Wickellocke zeigte folgende nach DIN 46 435 bestimmte Eigenschaften:
- Lackierofen-Temperatur:: vorne 320°C; hinten 340°C; (Ofenlänge 2,50 m)
- Verbackungsbedingungen:: 30 Minuten bei 180°C;
- Wiedererweichungstemperatur:: 255°C.

- Lackierofen-Temperatur:: vorne 340°C; hinten 360°C;
- Verbackungsbedingungen:: 30 Minuten bei 180°C;
- Wiedererweichungstemperatur:: 263°C.

- Lackierofen-Temperatur:: vorne 360°C; hinten 380°C;
- Verbackungsbedingungen:: 30 Minuten bei 180°C;
- Wiedererweichungstemperatur:: 255°C.

Die Prüfung am sog. Drillstab (R. Steinhaus, Proc. of the 15th Electronic/Electrical Insulation Conference, Chicago 1981, IEEE Publ. Nr. 81/CH 1717 - 8/81; S. 56 (1981), und R. Steinhaus, Proc. of the 18th Electronic/Electrical Insulation Conference, Chicago 1987, IEEE Publ. Nr. 87/CH 2451-. 1, S. 152 (1987)), zeigte folgende Verbackungsfestigkeiten:
23°C: 280; 130°C: 160; 155°C: 40 Newton.

### Vergleichsbeispiel

Zum Vergleich wurde ein handelsüblicher Backlack (XWE-1539, Schenectady) auf Polyamidbasis geprüft:

Der Festgehalt betrug 17 % bei einer Viskosität von 20 mPas.
- Lackierofen-Temperatur:: vorne 320°C; hinten 340°C;
- Verbackungsbedingungen:: 30 Minuten bei 180°C;
- Wiedererweichungstemperatur:: 194°C.

- Lackierofen-Temperatur:: vorne 340°C; hinten 360°C;
- Verbackungsbedingungen:: 30 Minuten bei 180°C;
- Wiedererweichungstemperatur:: 196°C.

- Lackierofen-Temperatur:: vorne 360°C; hinten 380°C;
- Verbackungsbedingungen:: 30 Minuten bei 180°C;
- Wiedererweichungstemperatur:: 188°C.

Die Prüfung am sog. Drillstab zeigte folgende Verbackungsfestigkeiten:
23°C: 200; 130°C: 45; 155°C: 16 Newton.

## Patentansprüche (Patentansprüche für folgende(n) Vertragsstaat(en): AT, BE, CH, DE, DK, FR, GB, IT, LI, NL, SE)

1. Schmeizklebelacklösung, enthaltend
A) 5 bis 80 Gew.-% eines Copolyamids, aufgebaut aus Einheiten, die sich ableiten von
A₁) organischen Dicarbonsäuren 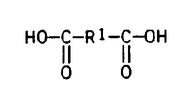 wobei R¹ für einen aliphatischen Rest mit 1 bis 20 C-Atomen oder einen aromatischen Rest mit 5 bis 25 C-Atomen steht
und
A₂) einer Mischung von Diisocyanaten aus
a₂₁) 20 bis 95 mol.% eine Diisocyanats oder eines Gemisches von aromatischen Diisocyanaten der allgemeinen Formel
OCN-R ²-NCO
wobei R² für einen aromatischen Rest mit 5 bis 25 C-Atomen steht,
a₂₂) 5 bis 70 mol% eines Diisocyanats der allgemeinen Formel
OCN-R³-NCO
wobei R³ für den Rest 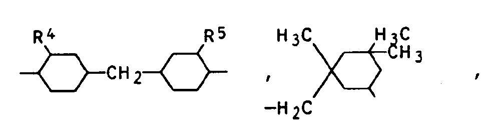 oder einen durch 1 bis 3 C₁-C₄-Alkylgruppen substituierten linearen aliphatischen Rest mit 3 bis 30 C-Atomen steht und R⁴ und R⁵ unabhängig voneinander je eine C₁-C₄-Alkylgruppe oder ein Wasserstoffatom darstellen,
a₂₃) 0 bis 20 mol% eines Diisocyanats der allgemeinen Formel
OCN-(CH₂)_{y}-NCO
wobei y eine ganze Zahl von 1 bis 20 ist,
und
B) 0,5 bis 30 Gew.-% eines blockierten Di- oder Polyisocyanats
in einem organischen Lösungsmittel oder Lösungsmittelgemisch.

2. Schmelzklebelacklösung nach Anspruch 1, dadurch gekennzeichnet, daß das Copolyamid die Verbindungen A₁ und A₂ im molaren Verhältnis 1:1 bis 1:0,8 einpolymerisiert enthält.

3. Schmelzklebelacklösung nach Anspruch 2, dadurch gekennzeichnet, daß das molare Verhältnis A₁:A₂ 1:0,99 bis 1:0,95 beträgt.

4. Schmelzklebelacklösung nach einem der Ansprüche 1 bis 3, dadurch gekennzeichnet, daß sich die organischen Dicarbonsäuren A₁ aus aliphatischen und aromatischen Dicarbonsäuren im molaren Verhältnis 6:1 bis 1:2 zusammensetzen.

5. Schmelzklebelacklösung nach Anspruch 4, dadurch gekennzeichnet, daß sich die organischen Dicarbonsäuren A₁ aus aliphatischen und aromatischen Dicarbonsäuren im molaren Verhältnis 2,5:1 bis 1,5:1 zusammensetzen.

6. Schmelzklebelacklösung nach einem der Ansprüche 1 bis 5, dadurch gekennzeichnet, daß es sich bei der Dicarbonsäure A₁ um Sebacinsäure, Azelainsäure, Terephthalsäure oder deren Mischungen handelt.

7. Schmelzklebelacklösung nach einem der Ansprüche 1 bis 6, dadurch gekennzeichnet, daß es sich bei dem Diisocyanat a₂₂ um Trimethylhexamethylendiisocyanate handelt.

8. Schmelzklebelacklösung nach einem der Ansprüche 1 bis 7, dadurch gekennzeichnet, daß es sich bei den Diisocyanaten A₂ um ein Gemisch aus 2,4-Toluylendiisocyanat, Diphenylmethandiisocyanat und Trimethylhexamethylen-diisocyanaten handelt.

9. Schmelzklebelacklösung nach einem der Ansprüche 1 bis 8, dadurch gekennzeichnet, daß die blockierten Di- oder Polyisocyanate mit Lactamen der allgemeinen Formel 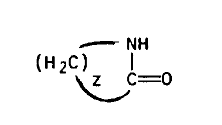 wobei z eine ganze Zahl von 3 bis 22 ist, blockiert sind.

10. Verwendung der Schmelzklebelacklösung nach den Ansprüchen 1 bis 9 zur Beschichtung von mit Elektroisolierlack vorbeschichteten Drähten.

11. Mit einem Schmelzklebelack beschichteter Draht erhalten unter Verwendung einer Schmelzklebelacklösung gemäß den Ansprüchen 1 bis 9.

## Patentansprüche (Patentansprüche für folgende(n) Vertragsstaat(en): ES, GR)

1. Verfahren zur Herstellung einer Schmelzklebelacklösung, dadurch gekennzeichnet, daß
5 bis 80 Gew.-% eines Copolyamids A), aufgebaut aus Einheiten, die sich ableiten von
organischen Dicarbonsäuren A₁) 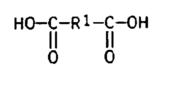 wobei R¹ für einen aliphatischen Rest mit 1 bis 20 C-Atomen oder einen aromatischen Rest mit 5 bis 25 C-Atomen steht
und
einer Mischung von Diisocyanaten A₂) aus
a₂₁) 20 bis 95 mol.% eines Diisocyanats oder eines Gemisches von aromatischen Diisocyanaten der allgemeinen Formel
OCN-R²-NCO
wobei R² für einen aromatischen Rest mit 5 bis 25 C-Atomen steht,
a₂₂) 5 bis 70 mol% eines Diisocyanats der allgemeinen Formel
OCN-R³-NCO
wobei R³ für den Rest 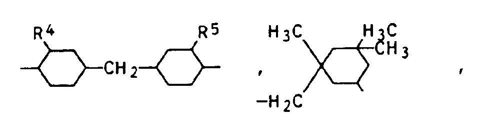 oder einen durch 1 bis 3 C₁-C₄-Alkylgruppen substituierten linearen aliphatischen Rest mit 3 bis 30 C-Atomen steht und R⁴ und R⁵ unabhängig voneinander je eine C₁-C₄-Alkylgruppe oder ein Wasserstoffatom darstellen, und
a₂₃) 0 bis 20 mol% eines Diisocyanats der allgemeinen Formel
OCN-(CH₂)_{y}-NCO
wobei y eine ganze Zahl von 1 bis 20 ist,
und
0,5 bis 30 Gew.-% eines blockierten Di- oder Polyisocyanats B) in einem organischen Lösungsmittel oder Lösungsmittelgemisch gelöst werden.

2. Verfahren nach Anspruch 1, dadurch gekennzeichnet, daß das Copolyamid die Verbindungen A₁ und A₂ im molaren Verhältnis 1:1 bis 1:0,8 einpolymerisiert enthält.

3. Verfahren nach Anspruch 2, dadurch gekennzeichnet, daß das molare Verhältnis A₁:A₂ 1:0,99 bis 1:0,95 beträgt.

4. Verfahren nach einem der Ansprüche 1 bis 3, dadurch gekennzeichnet, daß sich die organischen Dicarbonsäuren A₁ aus aliphatischen und aromatischen Dicarbonsäuren im molaren Verhältnis 6:1 bis 1:2 zusammensetzen.

5. Verfahren nach Anspruch 4, dadurch gekennzeichnet, daß sich die organischen Dicarbonsäuren A₁ aus aliphatischen und aromatischen Dicarbonsäuren im molaren Verhältnis 2,5:1 bis 1,5:1 zusammensetzen.

6. Verfahren nach einem der Ansprüche 1 bis 5, dadurch gekennzeichnet, daß es sich bei der Dicarbonsäure A₁ um Sebacinsäure, Azelainsäure, Terephthalsäure oder deren Mischungen handelt.

7. Verfahren nach einem der Ansprüche 1 bis 6, dadurch gekennzeichnet, daß es sich bei dem Diisocyanat a₂₂ um Trimethylhexa-methylendiisocyanate handelt.

8. Verfahren nach einem der Ansprüche 1 bis 7, dadurch gekennzeichnet, daß es sich bei den Diisocyanaten A₂ um ein Gemisch aus 2,4-Toluylendiisocyanat, Diphenylmethandiisocyanat und Trimethylhexamethylendiisocyanaten handelt.

9. Verfahren nach einem der Ansprüche 1 bis 8, dadurch gekennzeichnet, daß die blockierten Di- oder Polyisocyanate mit Lactamen der allgemeinen Formel 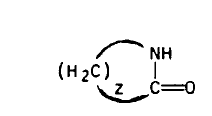 wobei z eine ganze Zahl von 3 bis 22 ist, blockiert sind.

10. Verwendung der Schmelzklebelacklösung nach den Ansprüchen 1 bis 9 zur Beschichtung von mit Elektroisolierlack vorbeschichteten Drähten.

11. Mit einem Schmelzklebelack beschichteter Draht erhalten unter Verwendung einer Schmelzklebelacklösung gemäß den Ansprüchen 1 bis 9.

## Claims (Claims for the following Contracting State(s): AT, BE, CH, DE, DK, FR, GB, IT, LI, NL, SE)

1. A self-bonding enamel solution, containing
A) from 5 to 80% by weight of a copolyamide composed of units which are derived from
A₁) organic dicarboxylic acids 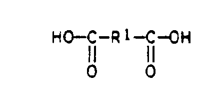 where R¹ is an aliphatic radical of 1 to 20 carbon atoms or an aromatic radical of 5 to 25 carbon atoms,
and
A₂) a mixture of diisocyanates comprising
a₂₁) from 20 to 95 mol % of a diisocyanate or of a mixture of aromatic diisocyanates of the formula
OCN-R²-NCO
where R² is an aromatic radical of 5 to 25 carbon atoms,
a₂₂) from 5 to 70 mol % of a diisocyanate of the formula
OCN-R³-NCO
where R³ is 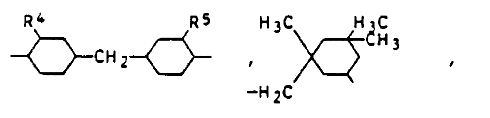 or a linear aliphatic radical of 3 to 30 carbon atoms which is monosubstituted to trisubstituted by C₁-C₄-alkyl and R⁴ and R⁴ independently of one another are each C₁-C₄-alkyl or hydrogen,
a₂₃) from 0 to 20 mol % of a diisocyanate of the formula
OCN-(CH₂)_{y}-NCO
where y is an integer of from 1 to 20
and
B) from 0.5 to 30% by weight of a blocked di- or polyisocyanate,
in an organic solvent or solvent mixture.

2. A self-bonding enamel solution as claimed in claim 1, wherein the copolyamide contains the compounds A₁ and A₂ as polymerized units in a molar ratio of from 1 : 1 to 1 : 0.8.

3. A self-bonding enamel solution as claimed in claim 2, wherein the molar ratio A₁ : A₂ is from 1 : 0.99 to 1 : 0.95.

4. A self-bonding enamel solution as claimed in any of claims 1 to 3, wherein the organic dicarboxylic acids A₁ comprise aliphatic and aromatic dicarboxylic acids in a molar ratio of from 6 : 1 to 1 : 2.

5. A self-bonding enamel solution as claimed in claim 4, wherein the organic dicarboxylic acids A₁ comprise aliphatic and aromatic dicarboxylic acids in a molar ratio of from 2.5 : 1 to 1.5 : 1.

6. A self-bonding enamel solution as claimed in any of claims 1 to 5, wherein the dicarboxylic acid A₁ is sebacic acid, azelaic acid, terephthalic acid or a mixture thereof.

7. A self-bonding enamel solution as claimed in any of claims 1 to 6, wherein the diisocyanate a₂₂ is a trimethylhexamethylene diisocyanate.

8. A self-bonding enamel solution as claimed in any of claims 1 to 7, wherein the diisocyanates A₂ are a mixture of 2,4-toluylene diisocyanate, diphenylmethane diisocyanate and trimethylhexamethylene diisocyanates.

9. A self-bonding enamel solution as claimed in any of claims 1 to 8, wherein the blocked di- or polyisocyanates are blocked with lactams of the formula 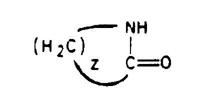 where z is an integer of from 3 to 22.

10. Use of a self-bonding enamel solution as claimed in any of claims 1 to 9 for coating wires precoated with electrical insulating enamel.

11. A wire coated with a self-bonding enamel and obtained using a self-bonding enamel solution as claimed in any of claims 1 to 9.

## Claims (Claims for the following Contracting State(s): ES, GR)

1. A process for the preparation of a self-bonding enamel solution, wherein from 5 to 80% by weight of a copolyamide A) composed of units which are derived from organic dicarboxylic acids A₁) 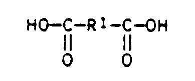 where R¹ is an aliphatic radical of 1 to 20 carbon atoms or an aromatic radical of 5 to 25 carbon atoms and
a mixture of diisocyanates A₂) comprising
a₂₁) from 20 to 95 mol % of a diisocyanate or of a mixture of aromatic diisocyanates of the formula
OCN-R²-NCO
where R² is an aromatic radical of 5 to 25 carbon atoms,
a₂₂) from 5 to 70 mol % of a diisocyanate of the formula
OCN-R³-NCO
where R³ is 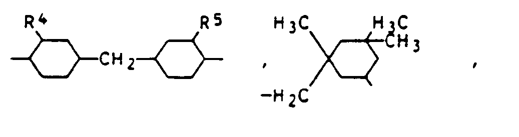 or a linear aliphatic radical of 3 to 30 carbon atoms which is monosubstituted to trisubstituted by C₁-C₄-alkyl and R⁴ and R⁴ independently of one another are each C₁-C₄-alkyl or hydrogen, and
a₂₃) from 0 to 20 mol % of a diisocyanate of the formula
OCN-(CH₂)_{y}-NCO
where y is an integer of from 1 to 20
and
from 0.5 to 30% by weight of a blocked di- or polyisocyanate B)
are dissolved in an organic solvent or solvent mixture.

2. A process as claimed in claim 1, wherein the copolyamide contains the compounds A₁ and A₂ as polymerized units in a molar ratio of from 1 : 1 to 1 : 0.8.

3. A process as claimed in claim 2, wherein the molar ratio A₁ : A₂ is from 1 : 0.99 to 1 : 0.95.

4. A process as claimed in any of claims 1 to 3, wherein the organic dicarboxylic acids A₁ comprise aliphatic and aromatic dicarboxylic acids in a molar ratio of from 6 : 1 to 1 : 2.

5. A process as claimed in claim 4, wherein the organic dicarboxylic acids A₁ comprise aliphatic and aromatic dicarboxylic acids in a molar ratio of from 2.5 : 1 to 1.5 : 1.

6. A process as claimed in any of claims 1 to 5, wherein the dicarboxylic acid A₁ is sebacic acid, azelaic acid, terephthalic acid or a mixture thereof.

7. A process as claimed in any of claims 1 to 6, wherein the diisocyanate a₂₂ is a trimethylhexamethylene diisocyanate.

8. A process as claimed in any of claims 1 to 7, wherein the diisocyanates A₂ are a mixture of 2,4-toluylene diisocyanate, diphenylmethane diisocyanate and trimethylhexamethylene diisocyanates.

9. A process as claimed in any of claims 1 to 8, wherein the blocked di- or polyisocyanates are blocked with lactams of the formula 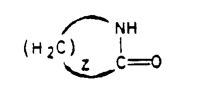 where z is an integer of from 3 to 22.

10. Use of a self-bonding enamel solution as claimed in any of claims 1 to 9 for coating wires precoated with electrical insulating enamel.

11. A wire coated with a self-bonding enamel and obtained using a self-bonding enamel solution as claimed in any of claims 1 to 9.

## Revendications (Revendications pour l'(les) Etat(s) contractant(s) suivant(s): AT, BE, CH, DE, DK, FR, GB, IT, LI, NL, SE)

1. Solution de vernis adhésif thermo-activable, contenant
A) 5 à 80% en poids d'un copolyamide composé de motifs qui dérivent
A₁) d'acides organiques dicarboxyliques 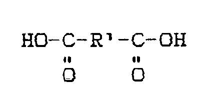 R¹ étant mis pour un reste aliphatique à 1-20 atomes de carbone ou pour un reste aromatique à 5-25 atomes de carbone
et
A₂) d'un mélange de diisocyanates composé de
a₂₁) 20 à 95% en moles d'un diisocyanate ou d'un mélange de diisocyanates aromatiques de formule génerale
OCN-R²-NCO
R² étant mis pour un reste aromatique a 5-25 atomes de carbone,
a₂₂) 5 à 70% en moles d' un diisocyanate de formule génerale
OCN-R³-NCO
R³ étant mis pour le reste 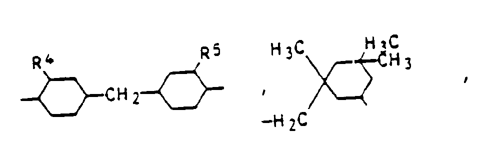 ou pour un reste aliphatique linéaire à 3-30 atomes de carbone, substitué par 1 à 3 groupements alkyle en C₁-C₄, et R⁴ et R⁵ représentent chacun, indépendamment l'un de l'autre, un groupement alkyle en C₁-C₄ ou un atome d'hydrogène, et
a₂₃) 0 à 20% en moles d'un diisocyanate de formule générale
OCN-(CH₂)_{y}-NCO
y étant un nombre entier de 1 à 20,
et
B) 0,5 à 30% en poids d'un di- ou polyisocyanate bloqué,
dans un solvant organique ou un mélange de solvants organiques.

2. Solution de vernis adhésif thermo-activable selon la revendication 1, caractérisée en ce que le copolyamide contient en liaison polymère les composés A₁ et A₂ dans un rapport molaire de 1:1 a 1:0,8.

3. Solution de vernis adhésif thermo-activable selon la revendication 2, caractérisée en ce que le rapport molaire A₁:A₂ se situe entre 1:0,99 et 1:0,95.

4. Solution de vernis adhésif thermo-activable selon l'une quelconque des revendications 1 à 3, caractérisée en ce que les acides organiques dicarboxyliques A₁ se composent d'acides dicarboxyliques aliphatiques et aromatiques dans un rapport molaire de 6:1 a 1:2.

5. Solution de vernis adhésif thermo-activable selon la revendication 4, caractérisée en ce que les acides organiques dicarboxyliques A₁ se composent d'acides dicarboxyliques aliphatiques et aromatiques dans un rapport molaire de 2,5:1 a 1,5:1.

6. Solution de vernis adhésif thermo-activable selon l'une quelconque des revendications 1 a 5, caractérisée en ce qu'il s'agit, en ce qui concerne les acides dicarboxyliques A₁, d'acide sébacique, d'acide azélaïque, d'acide téréphtalique ou de mélanges de ceux-ci.

7. Solution de vernis adhésif thermo-activable selon l'une quelconque des revendications 1 à 6, caractérisée en ce qu'il s'agit, en ce qui concerne le diisocyanate a₂₂, de diisocyanates de triméthylhexaméthylène,

8. Solution de vernis adhésif thermo-activable selon l'une quelconque des revendications 1 à 7, caractérisée en ce qu'il s'agit, en ce qui concerne les diisocyanates A₂, d'un mélange de diisocyanate de 2,4-toluylène, de diisocyanate de diphénylméthane et de diisocyanates de triméthylhexaméthylène.

9. Solution de vernis adhésif thermo-activable selon l'une quelconque des revendications 1 à 8, caractérisée en ce que les di- ou polyisocyanates bloqués sont bloqués par des lactames de formule générale 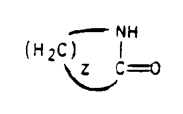 z étant un nombre entier de 3 à 22.

10. Utilisation de la solution de vernis adhésif thermo-activable selon l'une quelconque des revendications 1 à 9 pour l'enduction de fils métalliques préalablement enduits de vernis électro-isolant.

11. Fil métallique enduit de vernis adhésif thermo-activable, obtenu en utilisant une solution de vernis adhésif thermo-activable selon l'une quelconque der revendications 1 à 9.

## Revendications (Revendications pour l'(les) Etat(s) contractant(s) suivant(s): ES, GR)

1. Procédé de préparation d'une solution de vernis adhésif thermo-activable, caractérisé en ce que 5 à 80% en poids d'un copolyamide A) composé de motifs qui dérivent
d'acides organiques dicarboxyliques A₁) 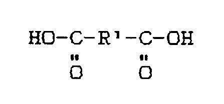 R¹ étant mis pour un reste aliphatique à 1-20 atomes de carbone ou pour un reste aromatique à 5-25 atomes de carbone
et
d'un mélange de diisocyanates A₂) composé de
a₂₁) 20 à 95% en moles d'un diisocyanate ou d'un mélange de diisocyanates aromatiques de formule générale
OCN-R²-NCO
R² étant mis pour un reste aromatique à 5-25 atomes de carbone,
a₂₂) 5 à 70% en moles d'un diisocyanate de formule générale
OCN-R³-NCO
R³ étant mis pour le reste 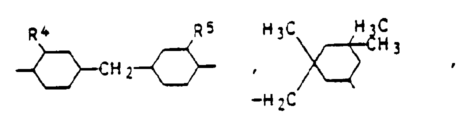 ou pour un reste aliphatique linéaire à 3-30 atomes de carbone, substitué par 1 à 3 groupements alkyle en C₁-C₄, et R⁴ et R⁵ représentent chacun, indépendamment l'un de l'autre, un groupement alkyle en C₁-C₄ ou un atome d'hydrogène, et
a₂₃) 0 à 20% en moles d'un diisocyanate de formule générale
OCN-(CH₂)_{y}-NCO
y étant un nombre entier de 1 à 20,
et
0,5 a 30% en poids d'un di- ou polyisocyanate bloqué B) sont dissous dans un solvant organique ou un mélange de solvants organiques.

2. Procédé selon la revendication 1, caractérisé en ce que le copolyamide contient en liaison polymère les composés A₁ et A₂ dans un rapport molaire de 1:1 à 1:0,8.

3. Procédé selon la revendication 2, caractérisé en ce que le rapport molaire A₁:A₂ se situe entre 1:0,99 et 1:0,95.

4. Procédé selon l'une quelconque des revendications 1 à 3, caractérisé en ce que les acides organiques dicarboxyliques A₁ se composent d'acides dicarboxyliques aliphatiques et aromatiques dans un rapport molaire de 6:1 à 1:2.

5. Procédé selon la revendication 4, caractérisé en ce que les acides organiques dicarboxyliques A₁ se composent d'acides dicarboxyliques aliphatiques et aromatiques dans un rapport molaire de 2,5:1 a 1,5:1.

6. Procédé selon l'une quelconque des revendications 1 à 5, caractérisé en ce qu'il s'agit, en ce qui concerne les acides dicarboxyliques A₁, d'acide sébacique, d'acide azélaïque, d'acide téréphtalique ou de mélanges de ceux-ci.

7. Procédé selon l'une quelconque des revendications 1 à 6, caractérisé en ce qu'il s'agit, en ce qui concerne le diisocyanate a₂₂, de diisocyanates de triméthylhexaméthylène.

8. Procédé selon l'une quelconque des revendications 1 à 7, caractérisé en ce qu'il s'agit, en ce qui concerne les diisocyanates A₂, d'un mélange de diisocyanate de 2,4-toluyléne, de diisocyanate de diphénylméthane et de diisocyanates de triméthylhexaméthylène.

9. Procédé selon l'une quelconque des revendications 1 à 8, caractérisé en ce que les di- ou polyisocyanates bloqués sont bloqués par des lactames de formule générale 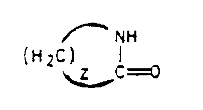 z étant un nombre entier de 3 à 22.

10. Utilisation de la solution de vernis adhésif thermo-activable selon l'une quelconque des revendications 1 à 9 pour l'enduction de fils métalliques préalablement enduits de vernis électro-isolant.

11. Fil métallique enduit de vernis adhésif thermo-activable, obtenu en utilisant une solution de vernis adhésif thermo-activable selon l'une quelconque des revendications 1 à 9.
